# EUROPÄISCHE PATENTSCHRIFT

(11) **EP 0 957 011 B1**
(45) Veröffentlichungstag und Bekanntmachung des Hinweises auf die Patenterteilung: **24.04.2002**
(21) Anmeldenummer: 99116168.8
(22) Anmeldetag: 13.02.1997
(51) Int. Cl.: B60R 21/22, B60R 21/20

(54) **Seitenaufprall-Schutzeinrichtung**
Side-impact protection device
Dispositif de protection contre les chocs latéraux

(30) Priorität: 23.02.1996 DE 29603316 U
(43) Veröffentlichungstag der Anmeldung: 17.11.1999
(62) Teilanmeldung aus: 97102307.2
(73) Patentinhaber: TRW Occupant Restraint Systems GmbH & Co. KG, 73553 Alfdorf (DE)
(72) Erfinder: Stütz, Michael, 73565 Spraitbach (DE); Eyrainer, Heinz, 73550 Waldstetten (DE)
(74) Vertreter: Kitzhofer, Thomas, Dipl.-Ing.

(56) Entgegenhaltungen:
- EP-A- 0 694 444
- DE-A- 2 249 988
- GB-A- 2 261 636
- PATENT ABSTRACTS OF JAPAN vol. 095, no. 008, 29. September 1995 (1995-09-29) & JP 07 117605 A (HONDA MOTOR CO LTD), 9. Mai 1995 (1995-05-09)
- PATENT ABSTRACTS OF JAPAN vol. 016, no. 099 (M-1220), 11. März 1992 (1992-03-11) & JP 03 276844 A (MAZDA MOTOR CORP), 9. Dezember 1991 (1991-12-09)

## Beschreibung

Die Erfindung betrifft eine Seitenaufprall-Schutzeinrichtung für Fahrzeuginsassen, mit einem aufblasbaren Kopf-Gassack, der in nicht entfaltetem Zustand unter einem Verkleidungsteil am Dachrahmen eines Fahrzeugs angeordnet ist.

Eine derartige Schutzeinrichtung ist bereits aus der DE 34 22 263 C2 bekannt, bei der ein mit Gas gefüllter Vorratsbehälter zum Aufblasen des Kopf-Gassacks im Fahrzeuglängsträger, also im Türschwellenbereich, angeordnet und über eine Leitung mit dem Kopf-Gassack verbunden ist. Der unter dem Verkleidungsteil am Dachrahmen angeordnete, gefaltete Kopf-Gassack sprengt das Verkleidungsteil im Kollisionsfall entweder weg oder verformt es, um sich seitlich von einem Fahrzeuginsassen zwischen dessen Kopf und der Seitenscheibe zu erstrecken. Die Lage des aufgeblasenen Kopf-Gassacks sowie seine Entfaltungsrichtung sind jedoch nicht exakt definiert, was zu Verzögerungen beim Aufblasvorgang sowie zu Sicherheitsrisiken führen kann, wenn der Gassack nicht exakt seitlich vom Kopf des Fahrzeuginsassen angeordnet ist oder sich während des Seitenaufpralls relativ zu diesem verschieben kann.

Aus der DE-OS 22 49 988 ist eine Seitenaufprall-Schutzeinrichtung mit einem aufblasbaren Kopf-Gassack bekannt, welcher zusammen mit einem Gasdruckbehälter in einer Aussparung in einem Verkleidungsteil am Dachrahmen befestigt ist, so daß das Verkleidungsteil den gefalteten Kopf-Gassack nicht umgibt und dieser von außen leicht (ungewollt) beschädigt werden kann. Der Behälter erstreckt sich zudem über die gesamte Länge des Kopf-Gassacks und ist entsprechend groß ausgebildet, was seine Unterbringung im Fahrzeug erschwert.

Aufgabe der Erfindung ist es, eine Seitenaufprall-Schutzeinrichtung zu schaffen, bei welcher die Lage des Kopf-Gassacks in entfaltetem Zustand sowie der Ablauf des Aufblasvorgang selbst gut reproduzierbar festgelegt sind.

Diese Aufgabe wird bei einer Seitenaufprall-Schutzeinrichtung der eingangs angegebenen Art dadurch gelöst, daß der Kopf-Gassack langgestreckt gefaltet unter dem Verkleidungsteil angeordnet ist und zumindest an zwei, an seinen beiden äußeren, im entfalteten Zustand oberen Enden gelegenen Stellen am Dachrahmen befestigt ist. Der Kopf-Gassack ist damit schon in ungefaltetem Zustand in seiner gesamten Längserstreckung im Fahrzeug selbst fest definiert angeordnet, da er in Längsrichtung ungefaltet ist. Der Entfaltungsvorgang muß deshalb hauptsächlich nur noch in vertikaler Richtung und in Richtung zum Kopf des Fahrzeuginsassen erfolgen. Ein ungeordneter Entfaltungsvorgang kann so vermieden werden. Zudem ist die Lage des Kopf-Gassacks damit auch in aufgeblasenem Zustand fest definiert, so daß es bei der erfindungsgemäßen Seitenaufprall-Schutzeinrichtung nicht zu einer Verschiebung des Kopf-Gassacks zum Fahrzeug kommen kann.

Gemäß einer bevorzugten Ausführungsform ist der Kopf-Gassack an seinen am Dachrahmen befestigten Enden mit Befestigungsösen versehen, was die Montage am Dachrahmen vereinfacht, da dort nur noch entsprechende Haken oder Schrauben vorgesehen sein müssen.

Gemäß einer weiteren Ausführungsform ist auch ein zugeordneter, langgestreckter Gasgenerator parallel zum gefalteten Kopf-Gassack unter dem Verkleidungsteil angeordnet, so daß lange Gasführungswege wie bei der Schutzeinrichtung nach der DE 34 22 263 C2 vermieden werden.

Der Gasgenerator kann eine zylinderförmige Außenkontur aufweisen und weiter an seiner äußeren Umfangsmantelfläche verteilte Gasausströmöffnungen aufweisen, wodurch sich ein schneller Entfaltungsvorgang ergibt.

Vorzugsweise erstreckt sich der Gasgenerator in Längsrichtung des gefalteten Kopf-Gassacks maximal über das mittlere Drittel des Kopf-Gassacks, was die Kompaktheit der erfindungsgemäßen Schutzeinrichtung erhöht.

Die erfindungsgemäße Schutzeinrichtung ist in einer bevorzugten Ausführungsform durch eine Montageplatte, auf der der Gasgenerator und der Kopf-Gassack vormontiert sind, am Dachrahmen befestigtbar. Dadurch kann die Schutzeinrichtung als komplett vormontiertes Modul geliefert werden, das schnell in ein Fahrzeug einbaubar ist.

Ist der Gasgenerator im Inneren des Kopf-Gassacks angeordnet, wird die Befestigung des Gasgenerators mit dem Kopf-Gassacks vereinfacht.

Auch die Montageplatte kann im Inneren des Kopf-Gassacks angeordnet sein, wobei vorzugsweise ein Teil zumindest einer Schrauben-Mutterverbindung zur Befestigung der Seitenaufprall-Schutzeinrichtung drehfest an der Montageplatte angeordnet ist und eine Öffnung an der zugehörigen Stelle im Kopf-Gassack vorhanden sein muß, durch die sich ein Schraubenschaft erstrecken kann. Ist eine Schraube an der Montageplatte zum Beispiel mit ihrem Schraubenkopf angeschweißt, so erstreckt sich der Schraubenschaft durch die Öffnung im Gassack nach außen, wo eine entsprechende Mutter zur Befestigung der Seitenaufprall-Schutzeinrichtung aufgeschraubt werden kann. Ist hingegen eine Mutter an der Montageplatte befestigt, kann entsprechend eine Schraube von außen her in die Mutter eingedreht werden.

Zudem ist es je nach Fahrzeuggeometrie unter Umständen vorteilhaft, wenn außerhalb des Kopf-Gassacks eine Adapterplatte angeordnet ist, welche mit der Montageplatte verbindbar und am Dachrahmen arretierbar ist. Die Montage wird durch die Adapterplatte vereinfacht, denn sie kann sich zu leicht zugänglichen Stellen im Bereich des Dachrahmens erstrecken.

Eine besonders einfache und sichere Befestigung des Gasgenerators an der Montageplatte wird gemäß einer vorteilhaften Ausführungsform dadurch erreicht, daß die Montageplatte schellenartig ausgebildet ist und den Gasgenerator umgreift. Der Durchmesser der schellenartigen Montageplatte wird durch eine Klemmeinrichtung verringert, wobei diese Einrichtung zugleich die Einrichtung zum Befestigen der Montageplatte sein kann, womit sich eine Teileeinsparung erzielen läßt.

Die Montageplatte kann darüber hinaus selbstverständlich auch außerhalb des Kopf-Gassacks angeordnet werden.

Um der Kopf-Gassack, während eines Transports in seinem gefaltetem Zustand zu halten, sind dieser und der Gasgenerator mittels einer sie umgebenden Folie oder eines Kunststoffrohres auf der Montageplatte vormontiert.

Ist das Verkleidungsteil im Bereich des Kopf-Gassacks gemäß einer bevorzugten Ausführungsform eine Klappe, die durch den Entfaltungsvorgang des Kopf-Gassacks geöffnet wird, welche fakultativ durch Sollbruchstellen im Verkleidungsteil gebildet ist, wird der Entfaltungsvorgang schneller erfolgen, und die Entfaltungsrichtung ist eindeutig vorbestimmbar, da der Kopf-Gassack keine hohen Kräfte zur Deformation von Teilen aufbringen muß.

Die Klappe kann zur Festlegung der Entfaltungsrichtung des Kopf-Gassacks beitragen, wenn sie mit einer Einrichtung zum Begrenzen ihres maximalen Öffnungswinkels versehen ist, die zum Beispiel ein Fangband umfaßt, das einerseits an der Klappe und andererseits am Dachrahmen befestigt ist.

Die Geometrie der Klappe und ihr maximaler Öffnungswinkel sind vorzugsweise so auf den Kopf-Gassack abgestimmt, daß die Klappe die Entfaltungsrichtung des Kopf-Gassacks schräg in Richtung zur Seitenscheibe lenkt und sich der Kopf-Gassack vor die Seitenscheibe schiebt.

Darüber hinaus ist gemäß einer weiteren Ausführungsform vorgesehen, daß das Verkleidungsteil so am Dachrahmen befestigt ist, daß sich der Kopf-Gassack zwischen dem Verkleidungsteil und dem Dachrahmen beim Entfaltungsvorgang hindurchschieben kann, wodurch sich eine Art Fischmaulöffnung ergibt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 die erfindungsgemäße Seitenaufprall-Schutzeinrichtung mit nicht entfaltetem Kopf-Gassack,
Fig. 2 die Seitenaufprall-Schutzeinrichtung nach Fig. 1 mit entfaltetem Kopf-Gassack,
Fig. 3 eine Querschnittsansicht der Seitenaufprall-Schutzeinrichtung nach Fig. 1 gemäß einer ersten Ausführungsform,
Fig. 4 eine Querschnittsansicht einer Seitenaufprall-Schutzeinrichtung gemäß einer zweiten Ausführungsform in nicht montiertem Zustand,
Fig. 5 eine Längsansicht der Seitenaufprall-Schutzeinrichtung nach Fig. 4,
Fig. 6 eine Seitenansicht der erfindungsgemäßen Seitenaufprall-Schutzeinrichtung gemäß einer weiteren Ausführungsform mit entfaltetem Kopf-Gassack,
Fig. 7 eine Querschnittsansicht der Seitenaufprall-Schutzeinrichtung nach der Linie A-A in Fig. 6, und
Fig. 8 eine Querschnittsansicht der Seitenaufprall-Schutzeinrichtung nach der Linie B-B in Fig. 6.

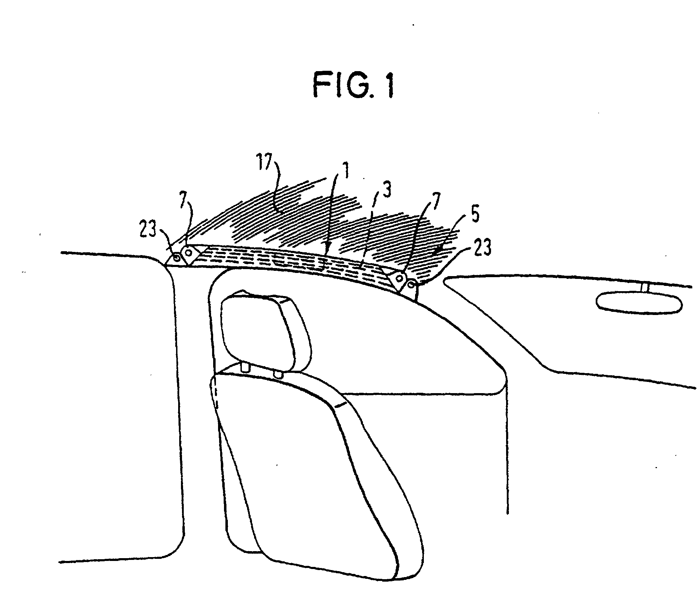

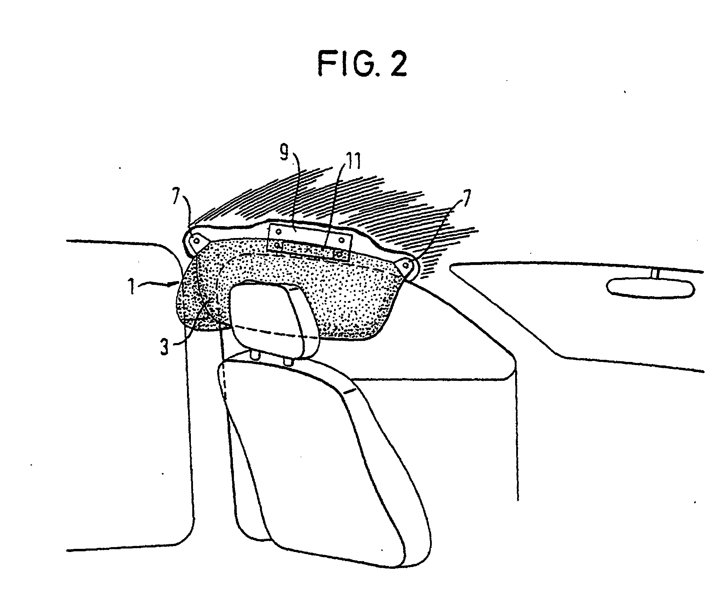

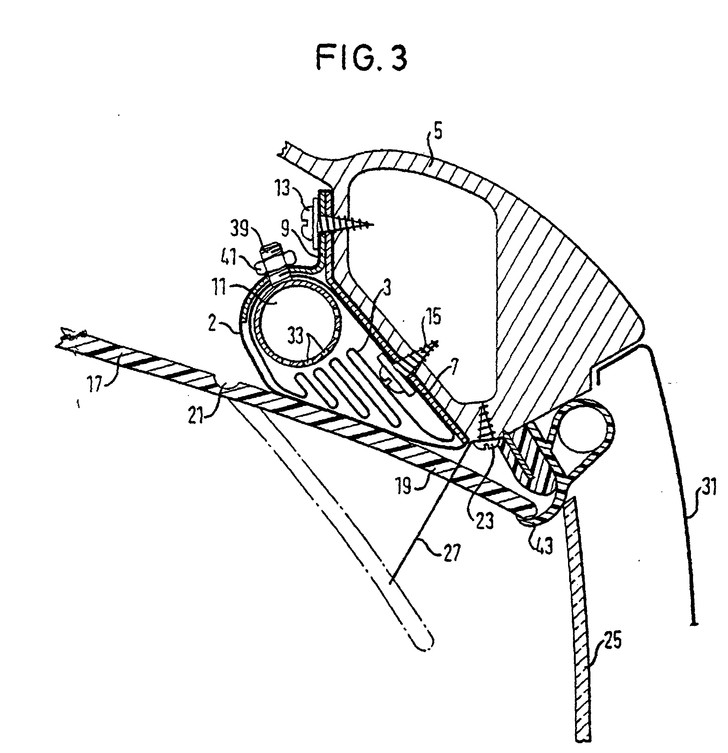

In Fig. 1 ist eine Seitenaufprall-Schutzeinrichtung 1 mit einem langgestreckt gefalteten Kopf-Gassack 3 gezeigt, welche an einem Dachrahmen 5 eines Fahrzeugs oberhalb des Türausschnittes unter einem Verkleidungsteil 17, welches den Fahrzeughimmel darstellt, angeordnet ist. Zur Verdeutlichung ist das Verkleidungsteil 17 in den Figuren 1 und 2 im Bereich der Seitenaufprall-Schutzeinrichtung 1 entfernt gezeichnet. Der gefaltete Kopf-Gassack 3 erstreckt sich von der Fahrzeug-A-Säule zur Fahrzeug-B-Säule und ist an zwei, an seinen beiden äußeren, im entfalteten Zustand oberen Enden 7 gelegenen Stellen am Dachrahmen 5 befestigt, wie Fig. 2 besser zu entnehmen ist. Der Kopf-Gassack 3 hat an diesen Stellen ohrenartige Fortsätze mit Befestigungsösen, durch die sich in den Dachrahmen 5 eindrehbare, in Fig. 3 gezeigte Schrauben 15 erstrecken. Ein Gasgenerator 11 erstreckt sich in Längsrichtung des gefalteten Kopf-Gassacks 3 über annähernd das mittlere Drittel des Kopf-Gassacks 3 und ist mittels einer Montageplatte 9 am Dachrahmen 5 befestigt, was in Fig. 3 eindeutig gezeigt ist.

Gemäß in Fig. 3 hat der Gasgenerator 11, der im Inneren des Kopf-Gassacks 3 angeordnet ist, eine zylinderförmige Außenkontur mit zahlreichen, an seiner äußeren Umfangsmantelfläche verteilten Gasausströmöffnungen 33, welche einem gefalteten Bereich des Kopf-Gassacks 3 zugewandt sind. Ein an der Umfangsmantelfläche angeformter Stehbolzen 39 mit einem Außengewinde erstreckt sich durch eine Öffnung im Kopf-Gassack 3 hindurch nach außen und weiter durch eine Öffnung in einer Y-förmigen Montageplatte 9. Ein Steg der Montageplatte 9, an welchem der Gasgenerator 11 über seinen Stehbolzen 39 mittels einer Mutter 41 befestigt ist, ist in seiner Form der Außenkontur des Gasgenerators 11 angepaßt und umgibt diesen teilweise, so daß beim Festdrehen der Mutter 41 der Gasgenerator 11 gegen den Steg der Montageplatte 9 gepreßt wird, wodurch die Öffnung im Kopf-Gassack 3 im Bereich des Stehbolzens 39 gegen Gasentweichen abgedichtet ist. An dem anderen Steg der Y-förmigen Montageplatte 9 sind ebenfalls Öffnungen vorgesehen, durch die sich Schrauben 13 zur Befestigung der Seitenaufprall-Schutzeinrichtung 1 am Dachrahmen 5 erstrecken. Die Seitenaufprall-Schutzeinrichtung 1 ist als komplett vormontierte Einheit einfach an den Dachrahmen 5 anschraubbar, wobei die Vormontage einerseits durch den Stehbolzen 39 und andererseits durch eine die Montageplatte 9, den gefalteten Kopf-Gassack 3 und den Gasgenerator 11 umgebende Folie 2 erfolgt. Das Verkleidungsteil 17, unter dem die Seitenaufprall-Schutzeinrichtung 1 von außen nicht sichtbar angeordnet ist, ist zum Teil als Klappe 19 ausgebildet, welche durch den Entfaltungsvorgang des Kopf-Gassacks 3 öffnenbar ist. Die Klappe 19 wird durch eine U förmig verlaufende Sollbruchstelle 21 im Verkleidungsteil 17 gebildet. Der in Richtung zu einer Fahrzeugtür 31 weisende Rand der Klappe 19 ist in ein schienenförmiges, am Dachrahmen 5 bestigtes Halteteil 43 eingeklinkt. Eine Einrichtung zum Begrenzen des maximalen Öffnungswinkels der Klappe 19 in Form eines Fangbandes 27 ist einerseits an der Klappe 19 und andererseits über eine Schraube 23 am Dachrahmen 5 befestigt, wobei die geöffnete Klappe 19 in Fig. 3 mit strichpunktierten Linien angedeutet ist.

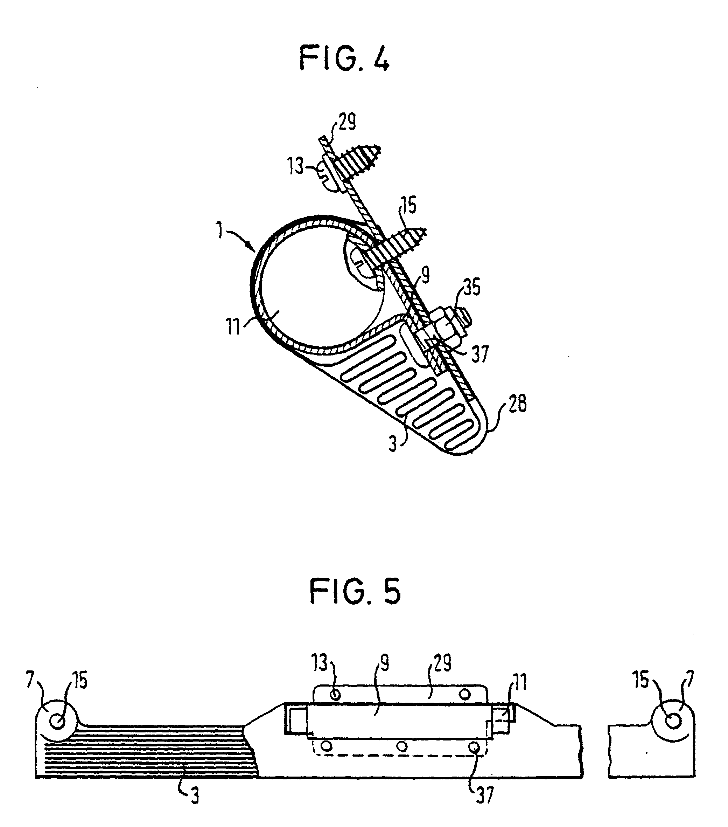

Fig. 4 zeigt eine zweite Ausführungsform der als komplette Einheit vormontierbaren Seitenaufprall-Schutzeinrichtung 1, bei welcher auch die Montageplatte 9 innerhalb des Kopf-Gassacks 3 angeordnet ist, indem sie sich schellenförmig um den Gasgenerator 11 herum erstreckt. Eine Schrauben-Mutterverbindung, bestehend aus einer Schraube 37 und einer Mutter 35, dient einerseits als Einrichtung zum Befestigen der Montageplatte 9 an einer außerhalb des Kopf-Gassacks 3 befindlichen Adapterplatte 29 und andererseits als Einrichtung zum Klemmen der schellenartig ausgebildeten Montageplatte 9. Hierzu ist der Kopf der Schraube 37 mit der Montageplatte 9 verschweißt. Ein zugehöriger Schraubenschaft erstreckt sich durch eine Öffnung in der Montageplatte 9 und in dem Kopf-Gassack 3 hindurch nach außen und weiter durch eine Öffnung in der Adapterplatte 29. Durch die Mutter 35 wird die Montageplatte 9 zusammen mit dem Kopf-Gassack 3 gegen die Adapterplatte 29 gedrückt und an ihr fixiert, wodurch die Öffnung im Kopf-Gassack 3 keine Leckgasströmungen zuläßt. Über die Schrauben 13 ist die Adapterplatte 29 und damit die gesamte Seitenaufprall-Schutzeinrichtung 1 am Dachrahmen 5 anschraubbar. Zur besseren Montage und zum leichteren Transport umgibt ein dünnes, geschlitztes Kunststoffrohr 28 den gefalteten Kopf-Gassack 3 und damit den Gasgenerator 11 und teilweise auch die Adapterplatte 29.

In Fig. 5 ist der Kopf-Gassack 3 im Bereich der Montageplatte 9 und des Gasgenerators 11 aufgeschnitten gezeigt. Dabei ist zu erkennen, daß die Montageplatte 9 sowie die Adapterplatte 29 seitlich nicht bis zu den oberen Enden 7 des Kopf-Gassacks 3 verläuft, sondern sich lediglich bis zu den seitlichen Enden des Gasgenerators 11 erstreckt.

Die Montage der Seitenaufprall-Schutzeinrichtung 1 als komplettes Modul erfolgt einfach mittels der beiden Schrauben 13 und durch ein anschließendes Eindrehen von Schrauben 15 durch die Befestigungsösen in den Dachrahmen 5.

Da der Kopf-Gassack 3 in Längsrichtung ungefaltet, also in seiner gesamten Längsausdehnung bereits festgelegt im Fahrzeug arretiert ist, ergibt sich eine stabile Gassacklage im entfalteten Zustand. Das Entfalten selbst wird bei einem Seitenaufprall durch Zünden des im Gasgenerator 11 befindlichen pyrotechnischen Materials eingeleitet, woraufhin Gas über die Gasausströmöffnungen 33 aus dem Gasgenerator 11 ausströmt und den Kopf-Gassack 3 entfaltet, worauf die Klappe 19 aus dem Halterteil 43 herausspringt und so weit in Richtung Fahrzeugmitte aufklappt, wie es das Fangband 27 erlaubt. Die Geometrie der Klappe 19 und ihr maximaler Öffnungswinkel sind so auf den Kopf-Gassack 3 abgestimmt, daß die Klappe 19 die Entfaltungsrichtung des Kopf-Gassacks 3 schräg in Richtung zu einer Seitenscheibe 25 lenkt. Bei voll entfaltenem Kopf-Gassack 3 ist ein Zwischenraum zwischen der geöffneteten Klappe 19 und der Seitenscheibe 25 durch den Kopf-Gassack 3 ausgefüllt. Der Kopf-Gassack 3 erstreckt sich unmittelbar angrenzend zur Seitenscheibe 25 nach unten und kann sich teilweise an dieser abstützen. Der Kopf-Gassack 3 selbst muß sich auf Grund seiner festgelegten Lage in Längsrichtung hauptsächlich nur nach unten und in Richtung zum Kopf eines Fahrzeuginsassen entfalten, wodurch ein schnelles, gut vorbestimmbares Entfalten ermöglicht wird. Die Klappe 19 ist sehr schmal gehalten und steht in aufgeschwenktem Zustand kaum nach innen vor, um kein Verletzungsrisiko für den Kopf des Fahrzeuginsassen darzustellen.

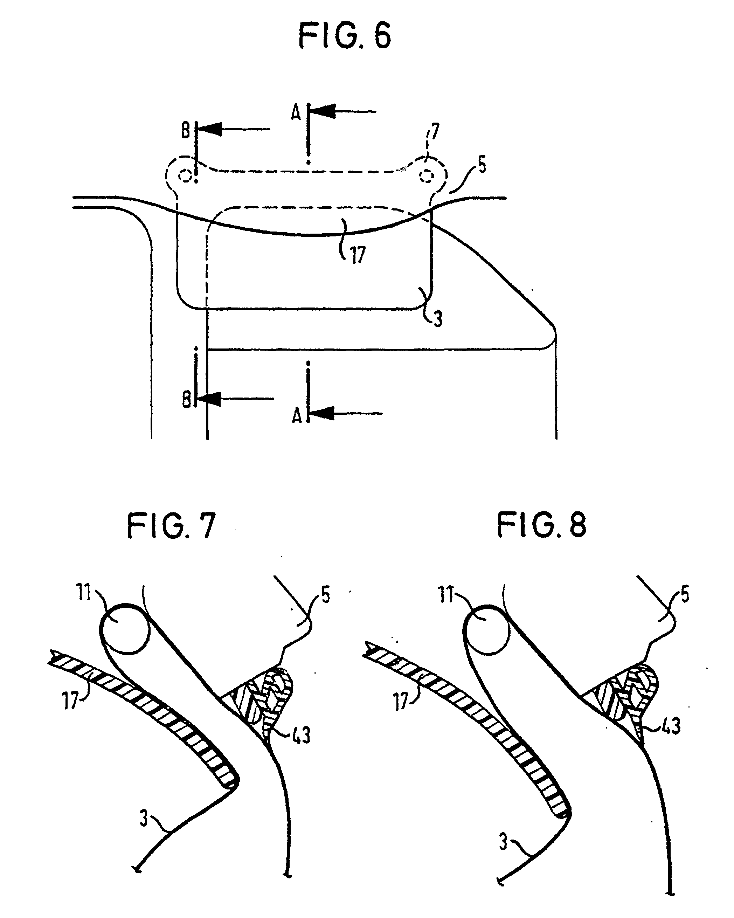

Anstatt der Klappe 19 kann das Verkleidungsteil 17, wie in den Figuren 6 bis 8 gezeigt, so am Dachrahmen 5 befestigt sein, daß sich der Kopf-Gassack 3 beim Entfaltungsvorgang zwischen diesem und dem Dachrahmen 5 hindurchschiebt und sich somit eine fischmaulartige Öffnung ergibt. Hierzu ist das Verkleidungsteil 17 über das Halteteil 43 am Dachrahmen 5 befestigt. Das Verkleidungsteil 17 löst sich beim Entfaltungsvorgang des Kopf-Gassacks 3 vom Halteteil 43 wie die Figuren 7 und 8 zeigen. Im Bereich außerhalb der Enden 7 bleibt es jedoch über das Halteteil 43 am Dachrahmen 5 befestigt. Das Verkleidungsteil 17 baucht so nach innen etwas aus, so daß sich in der Mitte des Kopf-Gassacks 3 ein breiterer Schlitz ergibt, durch den sich der Kopf-Gassack 3 hindurchschieben kann. Bei dieser Ausführungsform werden keine zusätzlichen Aufreißvorrichtungen benötigt.

## Patentansprüche

1. Seitenaufprall-Schutzeinrichtung für Fahrzeuginsassen, mit einem aufblasbaren Kopf-Gassack (3), der in nicht entfaltetem Zustand unter einem Verkleidungsteil (17) am Dachrahmen (5) eines Fahrzeugs angeordnet ist, **dadurch gekennzeichnet, daß** eine am Dachrahmen (5) befestigbare Montageplatte (9) vorgesehen ist, auf der der Kopf-Gassack (3) mittels einer ihn umgebenden Folie (2) oder eines Kunststoffrohres (28) vormontiert ist, und daß die Folie (2) oder das Kunststoffrohr (28), im Schnitt quer zur Längserstreckung des Kopf-Gassacks (3), den Gassack vollständig umgibt.

2. Seitenaufprall-Schutzeinrichtung nach Anspruch 1, **dadurch gekennzeichnet, daß** der Kopf-Gassack (3) langgestreckt gefaltet unter der Folie (2) oder dem Kunststoffrohr (28) angeordnet ist.

3. Seitenaufprall-Schutzeinrichtung nach Anspruch 1 oder 2, **dadurch gekennzeichnet, daß** der Kopf-Gassack (3) an seinen am Dachrahmen (5) befestigten Enden (7) mit Befestigungsösen versehen ist.

4. Seitenaufprall-Schutzeinrichtung nach einem der vorstehenden Ansprüche, **dadurch gekennzeichnet, daß** ein dem Kopf-Gassack (3) zugeordneter, langgestreckter Gasgenerator (11) parallel zum gefalteten Kopf-Gassack (3) unter dem Verkleidungsteil (17) angeordnet ist.

5. Seitenaufprall-Schutzeinrichtung nach einem der vorstehenden Ansprüche, **dadurch gekennzeichnet, daß** ein Gasgenerator (11) in Längsrichtung des gefalteten Kopf-Gassacks (3) im mittleren Drittel des Kopf-Gassacks (3) angeordnet ist.

6. Seitenaufprall-Schutzeinrichtung nach Anspruch 5, **dadurch gekennzeichnet, daß** der Gasgenerator (11) sich in Längsrichtung des gefalteten Kopf-Gassacks (3) maximal über das mittlere Drittel des Kopf-Gassacks (3) erstreckt.

7. Seitenaufprall-Schutzeinrichtung nach einem der vorstehenden Ansprüche, **gekennzeichnet durch** einen im Inneren des Kopf-Gassacks (3) angeordneten Gasgenerator (11).

8. Seitenaufprall-Schutzeinrichtung nach einem der vorstehenden Ansprüche, **dadurch gekennzeichnet, daß** die Montageplatte (9) im Inneren des Kopf-Gassacks (3) angeordnet ist.

9. Seitenaufprall-Schutzeinrichtung nach einem der vorstehenden Ansprüche, **dadurch gekennzeichnet, daß** auf der Montageplatte (9) ein Teil zumindest einer Schrauben-Mutterverbindung (35, 37) zur Befestigung der Seitenaufprall-Schutzeinrichtung (1) drehfest angeordnet ist und eine Öffnung an der zugehörigen Stelle im Kopf-Gassack (3) vorhanden ist, durch die sich ein Schraubenschaft erstrecken kann.

10. Seitenaufprall-Schutzeinrichtung nach einem der vorstehenden Ansprüche, **gekennzeichnet durch** eine außerhalb des Kopf-Gassacks (3) angeordnete Adapterplatte (29), die mit der Montageplatte (9) verbunden ist, wobei die Adapterplatte (29) am Dachrahmen (5) arretiert ist.

11. Seitenaufprall-Schutzeinrichtung nach einem der vorstehenden Ansprüche, **dadurch gekennzeichnet, daß** die Montageplatte (9) schellenartig ausgebildet ist.

12. Seitenaufprall-Schutzeinrichtung nach Anspruch 11, **dadurch gekennzeichnet, daß** die Montageplatte (9) den Gasgenerator (11) umfaßt und daß eine Einrichtung zum Befestigen der Montageplatte (9) als Einrichtung zum Klemmen der schellenartig ausgebildeten Montageplatte (9) dient.

13. Seitenaufprall-Schutzeinrichtung nach einem der vorstehenden Ansprüche, **dadurch gekennzeichnet, daß** die Montageplatte (9) außerhalb des Kopf-Gassacks angeordnet ist.

14. Seitenaufprall-Schutzeinrichtung nach einem der vorstehenden Ansprüche, **gekennzeichnet durch** einen Gasgenerator (11), der zusammen mit dem Kopf-Gassack (3) mittels der sie umgebenden Folie (2) oder des Kunststoffrohres (28) auf der Montageplatte (9) vormontiert ist.

15. Seitenaufprall-Schutzeinrichtung nach einem der vorstehenden Ansprüche, **dadurch gekennzeichnet, daß** sie durch die Montageplatte (9) und die wenigstens den Kopf-Gassack (3) umgebende Folie (2) oder das Kunststoffrohr (28) als komplett vormontierte Einheit am Dachrahmen (5) angeschraubt ist.

16. Seitenaufprall-Schutzeinrichtung nach einem der vorstehenden Ansprüche, **dadurch gekennzeichnet, daß** die Folie (2) oder das Kunststoffrohr (28) einstückig ausgebildet ist und die Montageplatte (9), im Schnitt quer zur Längserstreckung des Kopf-Gassacks (3), umgibt.

17. Seitenaufprall-Schutzeinrichtung nach Anspruch 16, **dadurch gekennzeichnet, daß** das Kunststoffrohr (28) geschlitzt ist.

18. Seitenaufprall-Schutzeinrichtung nach einem der vorstehenden Ansprüche, **dadurch gekennzeichnet, daß** der Kopf-Gassack (3), im Schnitt quer zu seiner Längserstreckung, umfangsmäßig geschlossen ist.

## Claims

1. A lateral impact protective device for vehicle occupants, comprising an inflatable head gas bag (3) which in the non-deployed condition thereof is arranged underneath a cladding part (17) on the roof frame (5) of a vehicle, **characterized in that** a mounting plate (9) is provided which is adapted to be fastened to the roof frame (5) and on which the head gas bag (3) is pre-mounted by means of a foil (2) surrounding it or by means of a plastic tube (28), and that the foil (2) or the plastic tube (28), in a section viewed transversely to the longitudinal extent of the head gas bag (3), fully surrounds the gas bag.

2. The lateral impact protective device as claimed in claim 1, **characterized in that** the head gas bag (3) is arranged folded in an elongated shape underneath the foil (2) or the plastic tube (28).

3. The lateral impact protective device as claimed in claim I or 2, **characterized in that** the head gas bag (3) is provided with attachment eyes at its ends (7) attached to the roof frame (5).

4. The lateral impact protective device as claimed in any of the preceding claims, **characterized in that** an elongated gas generator (11) associated to the head gas bag (3) is arranged parallel to the folded head gas bag (3) underneath the cladding part (17).

5. The lateral impact protective device as claimed in any of the preceding claims, **characterized in that** a gas generator (11) is arranged in the middle third of the head gas bag (3) in the longitudinal direction of the folded head gas bag (3).

6. The lateral impact protective device as claimed in claim 5, **characterized in that** the gas generator (11) extends in the longitudinal direction of the folded head gas bag (3) at the most along the middle third of the head gas bag (3).

7. The lateral impact protective device as claimed in any of the preceding claims, **characterized by** a gas generator (11) arranged in the interior of the head gas bag (3).

8. The lateral impact protective device as claimed in any of the preceding claims, **characterized in that** the mounting plate (9) is arranged in the interior of the head gas bag (3).

9. The lateral impact protective device as claimed in any of the preceding claims, **characterized in that** on the mounting plate (9) a part of at least one bolt/nut connection (35, 37) is arranged in a non-rotatable fashion for the attachment of the lateral impact protective device (1), and an opening is provided at the associated point on the head gas bag (3) through which a bolt shank may extend.

10. The lateral impact protective device as claimed in any of the preceding claims, **characterized by** an adapter plate (29) arranged outside the head gas bag (3) and connected with the mounting plate (9), the adapter plate (29) being fixed to the roof frame (5).

11. The lateral impact protective device as claimed in any of the preceding claims, **characterized in that** the mounting plate (9) is designed in the form of a hose clamp.

12. The lateral impact protective device as claimed in claim 11, **characterized in that** the mounting plate (9) engages around the gas generator (11), and that a means for attaching the mounting plate (9) serves as a means for clamping the mounting plate (9) designed in the form of a hose clamp.

13. The lateral impact protective device as claimed in any of the preceding claims, **characterized in that** the mounting plate (9) is arranged outside the head gas bag.

14. The lateral impact protective device as claimed in any of the preceding claims, **characterized by** a gas generator (11) which together with the head gas bag (3) is pre-mounted on the mounting plate (9) by means of the foil (2) surrounding them or by means of the plastic tube (28).

15. The lateral impact protective device as claimed in any of the preceding claims, **characterized in that** it is screwed to the roof frame (5) as a completely pre-assembled unit by the mounting plate (9) and by the foil (2) surrounding at least the head gas bag (3) or by the plastic tube (28).

16. The lateral impact protective device as claimed in any of the preceding claims, **characterized in that** the foil (2) or the plastic tube (28) is designed in one piece and surrounds the mounting plate (9) in a section viewed transversely to the longitudinal extent of the head gas bag (3).

17. The lateral impact protective device as claimed in claim 16, **characterized in that** the plastic tube (28) is slotted.

18. The lateral impact protective device as claimed in any of the preceding claims, **characterized in that** the head gas bag (3) has a closed circumference in a section viewed transversely to its longitudinal extent.

## Revendications

1. Dispositif de protection contre les impacts latéraux pour passagers de véhicule, comportant un coussin à gaz de tête (3) gonflable qui, à l'état non déployé, est agencé en dessous d'une pièce de revêtement (17) sur le cadre de toit (5) d'un véhicule, **caractérisé en ce qu'**il prévu une plaque de montage (9) qui peut être fixée sur le cadre de toit (5) et sur laquelle le coussin à gaz de tête (3) est monté au préalable au moyen d'une feuille (2) qui l'entoure ou d'un tube de matière plastique (28), et **en ce que** la feuille (2) ou le tube de matière plastique (28), dans une coupe vue transversalement à l'extension longitudinale du coussin à gaz de tête (3), entoure entièrement le coussin à gaz.

2. Dispositif de protection contre les impacts latéraux selon la revendication 1, **caractérisé en ce que** le coussin à gaz de tête (3) est agencé plié en extension latérale sous la feuille (2) ou sous le tube en matière plastique (28).

3. Dispositif de protection contre les impacts latéraux selon la revendication 1 ou 2, **caractérisé en ce que** le coussin à gaz de tête (3) est pourvu d'oeillets de fixation à ses extrémités fixées sur le cadre de toit (5).

4. Dispositif de protection contre les impacts latéraux selon la revendication 1 ou 2, **caractérisé en ce que** un générateur de gaz (11) allongé, associé au coussin à gaz de tête (3), est agencé parallèlement au coussin à gaz de tête (3) plié en dessous de la pièce de revêtement (17).

5. Dispositif de protection contre les impacts latéraux selon l'une quelconque des revendications précédentes, **caractérisé en ce qu'**un générateur de gaz (11) est agencé dans le tiers médian du coussin à gaz de tête (3) en direction longitudinale du coussin à gaz de tête (3) plié.

6. Dispositif de protection contre les impacts latéraux selon la revendication 5, **caractérisé en ce que** le générateur de gaz (11) s'étend au maximum sur le tiers médian du coussin à gaz de tête (3) en direction longitudinale du coussin à gaz (3) plié.

7. Dispositif de protection contre les impacts latéraux selon l'une quelconque des revendications précédentes, **caractérisé par** un générateur de gaz (11) agencé à l'intérieur du coussin à gaz de tête (3).

8. Dispositif de protection contre les impacts latéraux selon l'une quelconque des revendications précédentes, **caractérisé en ce que** la plaque de montage (9) est agencée à l'intérieur du coussin à gaz de tête (3).

9. Dispositif de protection contre les impacts latéraux selon l'une quelconque des revendications précédentes, **caractérisé en ce que** sur la plaque de montage (9), une partie au moins d'une liaison à vis et écrou (35, 37) est agencée de manière antirotative pour la fixation du dispositif de protection contre les impacts latéraux (1) et **en ce qu'**à l'emplacement associé dans le coussin à gaz de tête (3) se trouve une ouverture a travers laquelle peut s'étendre une tige de vis.

10. Dispositif de protection contre les impacts latéraux selon l'une quelconque des revendications précédentes, **caractérisé par** une plaque adaptatrice (29) agencée en dehors du coussin à gaz de tête (3), laquelle est reliée à la plaque de montage (9), la plaque adaptatrice (29) étant arrêtée sur le cadre de toit (5).

11. Dispositif de protection contre les impacts latéraux selon l'une quelconque des revendications précédentes, **caractérisé en ce que** la plaque de montage (9) est réalisée sous forme de collier de serrage.

12. Dispositif de protection contre les impacts latéraux selon la revendication 11, **caractérisé en ce que** la plaque de montage (9) entoure le coussin à gaz (11) et **en ce que** des moyens de fixation de la plaque de montage (9) servent de moyens de serrage de la plaque de montage (9) réalisée sous forme de collier de serrage.

13. Dispositif de protection contre les impacts latéraux selon l'une quelconque des revendications précédentes, **caractérisé en ce que** la plaque de montage (9) est agencée en dehors du coussin à gaz de tête.

14. Dispositif de protection contre les impacts latéraux selon l'une quelconque des revendications précédentes, **caractérisé par** un générateur de gaz (11) qui, conjointement avec le coussin à gaz de tête (3), est monté au préalable sur la plaque de montage (9) au moyen de la feuille (2) qui l'entoure ou du tube de matière plastique (28).

15. Dispositif de protection contre les impacts latéraux selon l'une quelconque des revendications précédentes, **caractérisé en ce qu'** il est vissé sur le cadre de toit (5) au moyen de la plaque de montage (9) et de la feuille (2) qui l'entoure ou du tube de matière plastique (28), servant d'unité entièrement montée au préalable,.

16. Dispositif de protection contre les impacts latéraux selon l'une quelconque des revendications précédentes, **caractérisé en ce que** la feuille (2) ou le tube de matière plastique (28) est réalisé d'une seule pièce et entoure la plaque de montage (9), dans une coupe vue transversalement à l'extension longitudinale du coussin à gaz de tête (3).

17. Dispositif de protection contre les impacts latéraux selon la revendication 16, **caractérisé en ce que** le tube de matière plastique (28) est fendu.

18. Dispositif de protection contre les impacts latéraux selon l'une quelconque des revendications précédentes, **caractérisé en ce que** le coussin à gaz de tête (3), dans une coupe vue transversalement à son extension longitudinal, est fermé sur sa circonférence.
